# EUROPEAN PATENT SPECIFICATION

(11) **EP 4 166 401 B1**
(45) Date of publication and mention of the grant of the patent: **30.07.2025**
(21) Application number: 21202482.2
(22) Date of filing: 13.10.2021
(51) Int. Cl.: B60T 8/17, B60T 17/22, B60T 13/74

(54) **A METHOD FOR RELEASING ELECTROMECHANICAL BRAKES, A MOBILE ENERGY STORAGE DEVICE FOR RELEASING THE ELECTROMECHANICAL BRAKES, AND A SYSTEM OF THE MOBILE ENERGY STORAGE DEVICE AND A BRAKE SYSTEM OF A TRAIN**
VERFAHREN ZUM LÖSEN VON ELEKTROMECHANISCHEN BREMSEN, MOBILE ENERGIESPEICHERVORRICHTUNG ZUM LÖSEN VON ELEKTROMECHANISCHEN BREMSEN UND SYSTEM AUS DER MOBILEN ENERGIESPEICHERVORRICHTUNG UND EINEM BREMSSYSTEM EINES ZUGES
PROCÉDÉ PERMETTANT DE LIBÉRER DES FREINS ÉLECTROMÉCANIQUES, DISPOSITIF DE STOCKAGE D'ÉNERGIE MOBILE POUR LIBÉRER LES FREINS ÉLECTROMÉCANIQUES, ET SYSTÈME DE DISPOSITIF DE STOCKAGE D'ÉNERGIE MOBILE ET SYSTÈME DE FREINAGE D'UN TRAIN

(43) Date of publication of application: 19.04.2023
(73) Proprietor: KNORR-BREMSE Systeme für Schienenfahrzeuge GmbH, 80809 München (DE)
(72) Inventor: BARATH, Gabor, 2335 Taksony (HU)

(56) References cited:
- WO-A1-2006/058825
- DE-A1- 102016 210 309
- GB-A- 2 448 318

## Description

The invention relates to a method for releasing electromechanical brakes, a mobile energy storage device for releasing electromechanical brakes, in particular, for supplying electromechanical brake actuators, and a system of the mobile energy storage device and a brake system of a train, in particular for releasing the electromechanical brakes of the brake system in case of failure of the power supply of the train.

In order to provide braking, electromechanical brakes are provided with electromechanical brake actuators comprising a motor, sensors and electronics to enable provision of a brake force. Due to the use of the electromechanical brake actuators, in case of a failure of power supply of the train, the brakes are active and, therefore, locked, and cannot be released because the internal components, as, e.g., the motor and electronics, do not work without electricity.

However, for example, during a rescue situation in which the train is to be towed by a rescue train, the brakes are to be released.

One option for releasing the brakes would be a disassembling of the actuators from the individual brakes one by one; however, this would cause a great effort since a train can include a large number of brakes. Another option would be that all of the actuators are released simultaneously by providing the brake system with energy; however, this would require supplying a large amount of energy with high peak current into the system which, in turn, would require a large and heavy energy storage device and a bigger cabling complexity of cars of the train.

Document GB 2 448 318 A discloses a portable interface unit for interfacing between locomotives having different brake control systems, which interface unit executes a method according to the preamble of claim 1.

In document WO 2006/058825 A1, an electromechanical brake system is disclosed.

The electromechanical brake system comprises an accumulator and, for intermittently providing a higher voltage, a storage device, such as a super capacitor, is provided for storing electrical energy.

Therefore, the object underlying the invention is to remedy the above disadvantages and to provide a suitable possibility for releasing the electromechanical brakes in case of failure of the power supply of the train without increasing the mass and the costs of the train and the effort for releasing the brakes.

The object is achieved by a method according to claim 1, a mobile portable energy storage device according to claim 6, and a system according to claim 10.

Advantageous further developments are included in the dependent claims.

According to an aspect of the invention, a method for releasing electromechanical brakes by means of respectively assigned electromechanical brake actuators comprises the steps: successively connecting the brake actuators to a mobile energy storage device supplying electrical energy for releasing the brakes, and releasing the brakes by actuating the brake actuators using the energy from the mobile energy storage device.

When using a mobile energy storage device for the release of the brakes, no disassembling of the actuators is necessary and the additional equipment of the train is limited to a connector device for connecting the mobile energy storage device to the actuators without requiring a larger cabling complexity of the cars or an additional large energy storage device on the train.

According to the invention, the brake actuators are operated according to an empirically determined speed profile in which the total energy consumption of the brake actuators during the release time of the brakes is minimum to enable an energy-saving release of the brakes.

By this measure, the actuators are operated according to a speed profile with the lowest energy consumption and, therefore, the amount of the necessary energy and, therefore, of the charging capacity of the energy storage device is reduced which enables a smaller and lighter energy storage device.

In a further advantageous implementation of the method, the brake actuators are grouped into several brake actuator groups, and the brake actuator groups are successively, individually supplied by the mobile energy storage device.

Due to this measure, the energy required simultaneously for releasing the brakes is reduced since a reduced number of brake actuators are to be operated for releasing the brakes at the same time. Therefore, also, the charging capacity of the mobile energy storage device can be reduced and, therefore, the costs therefore are reduced and the handling is facilitated due to a reduced size and weight.

In a further advantageous implementation of the method, it comprises the step: charging a first energy storage component of the energy storage device by means of energy stored in a second energy storage component of the energy storage device; and supplying the brake actuators with energy stored in the first energy storage component.

When using the two energy storage components, the individual energy storage components can be optimized, namely, on the one hand, the second energy storage device for comprising a large energy capacity for providing energy for a large number of release operations and, on the other hand, the first energy storage device for providing a sufficient current peak value for enabling a requested speed of the actuators.

In a further advantageous implementation of the method, the first energy storage component is a capacitor and the second energy storage component is a battery, and the first energy storage component is charged via a charger and booster for controlling charging of the first energy storage component.

The battery provides an advantageous relationship between charging capacity and weight and size. Due to the charger and booster, the discharging of the battery can be optimized, particularly concerning time for discharging the second energy storage component and, therefore, for charging the capacitor. If the battery is discharged slowly while considering the time between the individual release operations, it is possible to use a battery with less weight which reduces costs and enhances handling of the energy storage component. The booster in the form of a voltage level booster is necessary for discharging the maximum energy from the battery and for achieving the best operating voltage for the actuators.

By a further advantageous implementation of the method, the brake actuators are supplied via a discharge limiter of the energy storage device.

The use of the discharge limiter protects the energy storage device since it ensures a safe operation range of the first energy storage component.

According to a further aspect of the invention, a mobile energy storage device for supplying electromechanical brake actuators for releasing electromechanical brakes comprises a first energy storage component and a second energy storage component, wherein the second energy storage component is configured to charge the first second energy storage component, and the first energy storage component is configured to supply the brake actuators with energy.

When using the two energy storage components, the individual energy storage components can be optimized, on the one hand, the second energy storage device for comprising a large energy capacity for providing energy for several release operations and, on the other hand, the first energy storage device for providing a sufficient current peak value for enabling a requested speed of the actuators, whereby, the dimensions and the weight of the energy storage device can be optimized.

In an advantageous implementation of the mobile energy storage device, the first energy storage component is formed by a capacitor and the second energy storage component is formed by a battery.

The use of the capacitor as the first energy storage component and of the battery as the second energy storage component enables optimization of the energy storage component in view of the provision of the energy in a sufficient amount having a suitable parameters while optimizing dimensions and weight of the energy storage device.

In a further advantageous implementation of the mobile energy storage device, the battery is formed by one of a Lithium-ion accumulator, a NIMH accumulator and a lead acid accumulator.

These types of batteries enable an advantageous relationship between the charging capacity and the weight and size of the batteries.

According to the invention, the mobile energy storage device further comprises a charger and booster configured to control charging of the first energy storage component.

Due to the charger and booster, the discharging of the second energy storage component and, therefore, the charging of the first energy storage component can be optimized, particularly concerning time for discharging the second energy storage component.

In a further advantageous implementation of the mobile energy storage device, it further comprises a discharge limiter configured to control a supply current supplying the brake actuators.

The provision of the discharge limiter protects the energy storage device since it ensures a safe operation range of the first energy storage component.

According to the invention the mobile energy storage device is configured to be portable.

This characteristic enables a facilitated use of the energy storage device since, in case of several actuator groups spread along a train, it enables an easy transport from one actuator group to the next actuator group for releasing the respective brake actuators.

According to another aspect of the invention, a system of a mobile energy storage device and a brake system of a train comprises several electromechanical brakes provided with brake actuators grouped into several brake actuator groups, wherein the brake actuator groups are configured such that brake actuators of the brakes of one of the brake actuator groups are connectable to the energy storage device by one connector device.

In such a system, no disassembling of the actuators is necessary and the additional equipment of the train is limited to a connector device for connecting the mobile energy storage device to the actuators without requiring a larger cabling complexity of the cars or an additional large energy storage device on the train.

According to the invention, the brake actuators are configured to have a reduced energy consumption during release of the brakes by an empirically determined optimized speed profile of the brake actuators.

Due to the optimized speed profile, the actuators are operated according to a speed profile with the lowest energy consumption and, therefore, the amount of the necessary energy and, therefore, of the charging capacity of the energy storage device is reduced which enables a smaller and lighter energy storage device and, therefore, the costs therefore are reduced and a handling is facilitated.

Subsequently, the invention is elucidated by means of embodiments referring to the attached drawings.

In particular,
- Fig. 1: shows a diagrammatic illustration of a system including an energy storage device and brake system of a train, which brake system is provided with brake actuator groups;
- Fig. 2: shows a diagram illustrating a speed profile and an energy consumption at a low speed of an actuator;
- Fig. 3: shows a diagram illustrating a speed profile and an energy consumption at an optimized speed of an actuator; and
- Fig. 4: shows a flowchart of a method for releasing electromechanical brakes of the train.

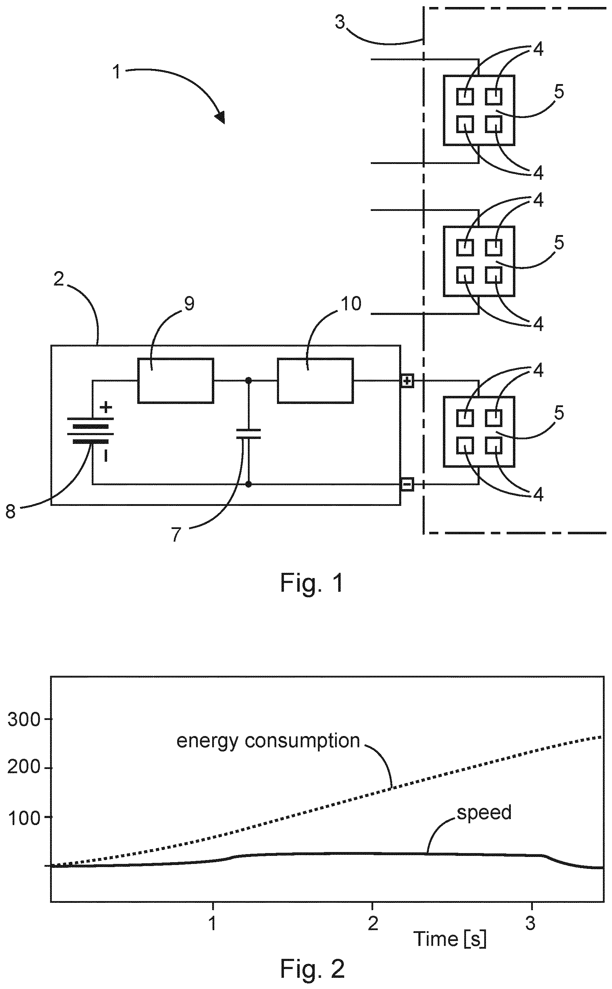

**Fig. 1** shows a diagrammatic illustration of a system 1 including a mobile energy storage device 2 and a brake system 3 of a train. The brake system 3 comprises electromechanical brakes (not shown) and brake actuators 4 assigned to respective electromechanical brakes.

In the present embodiment, four brake actuators 4 are respectively grouped into brake actuator groups 5. The brake actuators 4 of the brake actuator groups 5 are connectable to the energy storage device 2 by means of cables 6 and a connector device (not shown). In alternative embodiments, another quantity of the brake actuators 4 are grouped into the brake actuator groups 5 or the brake actuators 4 are not grouped into brake actuator groups 5 but the brake actuators 4 are individually connected to the mobile energy storage device 2.

An energy consumption of the brake actuators 4 is reduced by determining an optimized speed profile of the brake actuators 4.

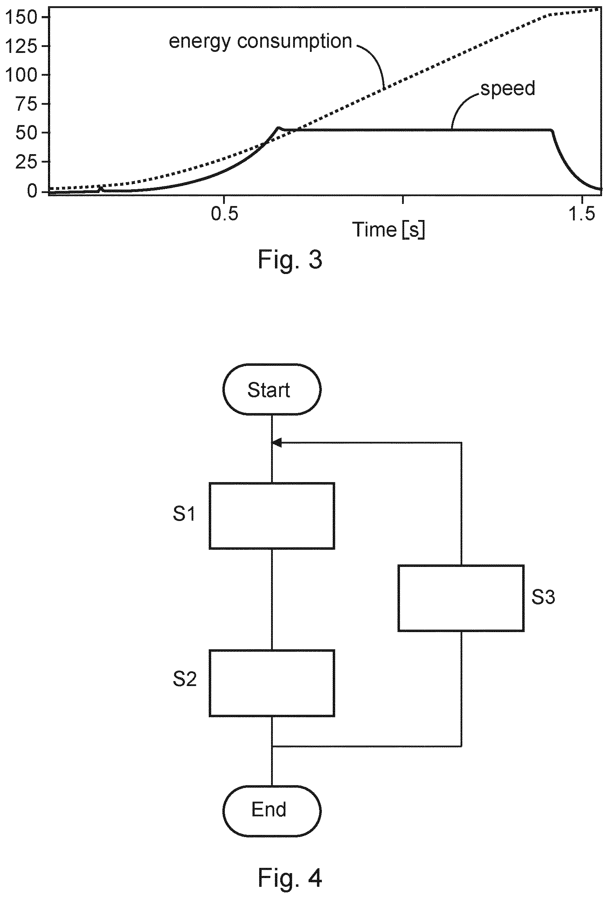

**Fig. 2** shows a diagram illustrating a speed profile and an energy consumption of one of the brake actuators 4 at a low speed. On the abscissa of the diagram, the elapsed time is indicated in [s] and, on the ordinate, the speed is indicated in [rad/s] and the energy consumption is indicated in [J]. **Fig. 3** shows a diagram illustrating a speed profile and an energy consumption of one of the brake actuators 4 at an optimized speed. Also in this diagram, on the abscissa of the diagram, the elapsed time is indicated in [s] and, on the ordinate, the speed is indicated in [rad/s] and the energy consumption is indicated in [J].

As to been seen from Fig. 2, the maximum speed of the actuator 4 is 20 rad/s and a duration of one release procedure is about 3 seconds. In this case, an energy consumption of 260 kJ for one release procedure results. Fig. 3 shows that at the maximum speed of the actuator 4 is 50 rad/s and at a duration of the one release procedure of about 1.4 seconds, and an energy consumption of the actuator 4 of 155 J for one release procedure results.

Therefore, for having a reduced energy consumption during release of the brakes, an optimized speed profile is to be determined by empirical tests. According to the results of the present investigations, the speed profile is to be designed such that the speed of the brake actuators 4 is to be high in order to reduce operating time of the brake actuators 4. Due to the reduced operating time, in spite of a higher current, the consumed energy for releasing the brakes is reduced compared to brake actuators 4 having a low speed and an increased operating time.

The energy storage device 2 provides energy for actuating the electromechanical brake actuators for releasing the brakes of the train in case of a failure of the power supply of the train.

The mobile energy storage device 2 shown in Fig. 1 comprises a first energy storage component 7 and a second energy storage component 8. The second energy storage component 8 is configured to charge the first energy storage component 7 and the first energy storage component is configured to then supply the brake actuators 4 with energy. The mobile energy storage device 2 is configured to be portable, nevertheless, in alternative embodiments, it is provided, e.g., with castors for being movable.

The first energy storage component 7 is formed by a capacitor, in particular, by a capacitor bank using Super/Ultra capacitor technology which farther reduces the weight of the first energy storage component 7. In alternative embodiments, the first energy storage component 7 can also be formed by another kind of energy storage components providing suitable operating properties.

The second energy storage component 8 is formed by a battery, in particular, by a Lithium-ion accumulator. In alternative embodiments, the second energy storage component 8 can be formed of a NIMH accumulator, a lead acid accumulator or another suitable kind of battery.

The capacitor bank being the first energy storage component 7 and the battery being the second energy storage component 8 provide the following advantages. The battery has an advantageous relationship between charging capacity and weight and size so that a larger amount of energy for several releasing procedures can be stored without excessively increasing size and weight of the mobile energy storage device. However, the battery cannot provide a high peak current which is necessary for achieving a high speed of the actuators 4. Therefore, the capacitor bank which has a small charging capacity, however, sufficient for one releasing procedure, is used for providing the high peak current without the need of a large charging capacity since it can be charged by the battery after each releasing procedure.

The mobile energy storage device 2 further comprises a charger and booster 9 and a discharge limiter 10.

The charger and booster 9 controls charging of the first energy storage component 7. The charger and booster 9 enables charging the first energy storage component 7 with energy by discharging the second energy storage component 8 in an optimized manner. The discharging of the second energy storage component 8 is performed as slowly as possible so that a battery having less weight can be used, nevertheless, keeping in mind that the first energy storage component 7 is to be charged completely after being disconnected from the last actuator group 5 before being connected to a next actuator group 5. In particular, the booster enables discharging of the maximum energy from the battery and achieving the best operating voltage for the actuators 4.

The discharge limiter 10 is configured to control and to limit a supply current supplying the brake actuators 4. Therefore, the discharge limiter 10 ensures a safe operation range of the capacitor bank and, therefore, it protects the energy storage device 2.

**Fig. 4** shows a flowchart of a method for releasing electromechanical brakes of the brake system 3 of the train.

In use, when a failure of the power supply of the train occurs, however, the train has to be moved, for example, into a next station, the electromechanical brakes of the brake system 3 of the train have to be released by means of the respectively assigned brake actuators 4. The following procedure can be executed under the premise that the second energy storage component 8 is sufficiently charged.

In step S1, the brake actuators 4, particularly when grouped into the actuator groups 5, the actuator groups 5, are successively connected to the mobile energy storage device 2 supplying electrical energy for releasing the brakes. This connecting procedure are performed by connecting a connector device having two connector components, one being joined to the mobile energy storage device 2 and the other one being joined to the brake actuators 4.

In step S2, the brake actuators 4 supplied with energy from the mobile energy storage device 2 are actuated and, thereby, the brakes being in a locked state are released since the brake actuators 4 are supplied with energy stored in the first energy storage component 7 of the mobile energy storage device. The brake actuators 4 are actuated by a switch included in the mobile energy storage device 2. Alternatively, the switch is assigned to the brake actuators 4.

These two steps S1 and S2 are repeated until all of the brakes of the brake system 3 of the train are released and, when all of the brakes of the brake system 3 are released, the train can be moved.

In step S3, the first energy storage component 7, i.e., the capacitor bank, of the energy storage device 2 is charged by means of energy stored in the second energy storage component 8, i.e., the Lithium-ion accumulator, of the energy storage device 2. If the energy storage device 2 has another structure, an energy storage component supplying the brake actuators 4 with energy can be charged in another manner as long as the sufficient amount of energy is available.

The capacitor bank is charged via the charger and booster 9 such that the charging of the first energy storage component 7 is controlled by the charger and booster 9. If, in alternative embodiments, the charge and booster 9 is not available, charging of the first energy storage component 7 is controlled by another electronics.

The supply of the brake actuators 4 is performed via the discharge limiter 10 of the energy storage device 2 and, thereby, the discharge limiter 10 ensures a safe operation range of the capacitor bank, whereby, it protects the energy storage device 2. If, in an alternative embodiment, the discharge limiter 10 is not available, the energy storage device 2 is protected in another manner or the protection is omitted.

The method can be performed by means of a computer program product stored on a machine-readable carrier. Alternatively, the method can be performed in another suitable manner, e.g., by a hardwired device.

### LIST OF REFERENCE SIGNS

- 1: system
- 2: mobile energy storage device
- 3: brake system
- 4: brake actuator
- 5: brake actuator group
- 6: cable
- 7: first energy storage component
- 8: second energy storage component
- 9: charger and booster
- 10: discharge limiter

## Claims

1. A method for releasing electromechanical brakes of a train, by means of respectively assigned electromechanical brake actuators (4), comprising the steps:
connecting the brake actuators (4) to a mobile portable energy storage device (2) supplying electrical energy for releasing the brakes; and
releasing the brakes by actuating the brake actuators (4) using the energy from the mobile portable energy storage device (2),
**characterized in that**
the brake actuators (4) are successively connected to the mobile portable energy storage device (2), and
the brake actuators (4) are operated according to an empirically determined speed profile in which the total energy consumption of the brake actuators (4) during the release time of the brakes is minimum to enable an energy-saving release of the brakes.

2. The method of claim 1, wherein
the brake actuators (4) are grouped into several brake actuator groups (5), and
the brake actuator groups (5) are successively, individually supplied by the mobile portable energy storage device (2).

3. The method of anyone of the preceding claims, comprising the step:
charging a first energy storage component (7) of the energy storage device (2) by means of energy stored in a second energy storage component (8) of the energy storage device (2); and supplying the brake actuators (4) with energy stored in the first energy storage component (7).

4. The method of claim 3, wherein
the first energy storage component (7) is formed by a capacitor and the second energy storage component (8) is formed by a battery, and the first energy storage component (7) is charged via a charger and booster (9) for controlling charging of the first energy storage component (7).

5. The method of claim 3 or 4, wherein
the brake actuators (4) are supplied via a discharge limiter (10) of the energy storage device (2).

6. A mobile portable energy storage device (2) for supplying electromechanical brake actuators (4) for releasing electromechanical brakes of a train, comprising
a first energy storage component (7), and
a second energy storage component (8), wherein
the second energy storage component (8) is configured to charge the first energy storage component (7), and
the first energy storage component (7) is configured to supply the brake actuators (4) with energy,
**characterized in that**
the mobile portable energy storage device (2) further comprises
a charger and booster (9) configured to control charging of the first energy storage component (7).

7. The mobile portable energy storage device (2) of claim 6, wherein
the first energy storage component (7) is formed by a capacitor, and
the second energy storage component (8) is formed by a battery.

8. The mobile portable energy storage device (2) of claim 7, wherein
the battery is formed by one of a Lithium-ion accumulator, a NIMH accumulator and a lead acid accumulator.

9. The mobile portable energy storage device (2) of anyone of claims 6 to 8, further comprising
a discharge limiter (10) configured to control a supply current supplying the brake actuators (4).

10. A system (1) of a mobile portable energy storage device (2) of anyone of claims 6 to 9 and a brake system (3) of a train comprising several electromechanical brakes provided with brake actuators (4) grouped into several brake actuator groups (5), wherein
the brake actuator groups (5) are configured such that brake actuators of one of the brake actuator groups (5) are connectable to the energy storage device (2) by one connector device,
**characterized in that**
the brake actuators (4) are configured to have a reduced energy consumption during release of the brakes by an empirically determined optimized speed profile of the brake actuators (4).

## Patentansprüche

1. Verfahren zum Lösen von elektromechanischen Bremsen eines Zuges anhand jeweils zugeordneter elektromechanischer Bremsbetätigungsvorrichtungen (4), umfassend die Schritte:
Verbinden der Bremsbetätigungsvorrichtungen (4) mit einer mobilen tragbaren Energiespeichervorrichtung (2), die mit elektrischer Energie zum Lösen der Bremsen versorgt; und
Lösen der Bremsen durch Betätigen der Bremsbetätigungsvorrichtungen (4) unter Verwendung der Energie aus der mobilen tragbaren Energiespeichervorrichtung (2),
**dadurch gekennzeichnet, dass**
die Bremsbetätigungsvorrichtungen (4) nacheinander mit der mobilen tragbaren Energiespeichervorrichtung (2) verbunden werden, und
die Bremsbetätigungsvorrichtungen (4) nach einem empirisch bestimmten Geschwindigkeitsprofil betrieben werden, bei dem der Gesamtenergieverbrauch der Bremsbetätigungsvorrichtungen (4) während der Lösezeit der Bremsen minimal ist, um ein energiesparendes Lösen der Bremsen zu ermöglichen.

2. Verfahren nach Anspruch 1, wobei
die Bremsbetätigungsvorrichtungen (4) in mehrere Bremsbetätigungsvorrichtungsgruppen (5) gruppiert sind, und
die Bremsbetätigungsvorrichtungsgruppen (5) nacheinander einzeln von der mobilen tragbaren Energiespeichervorrichtung (2) versorgt werden.

3. Verfahren nach einem der vorstehenden Ansprüche, umfassend den Schritt:
Laden einer ersten Energiespeicherkomponente (7) der Energiespeichervorrichtung (2) anhand von Energie, die in einer zweiten Energiespeicherkomponente (8) der Energiespeichervorrichtung (2) gespeichert ist; und Versorgen der Bremsbetätigungsvorrichtungen (4) mit Energie, die in der ersten Energiespeicherkomponente (7) gespeichert ist.

4. Verfahren nach Anspruch 3, wobei
die erste Energiespeicherkomponente (7) von einem Kondensator gebildet wird und die zweite Energiespeicherkomponente (8) von einer Batterie gebildet wird, und die erste Energiespeicherkomponente (7) über ein Ladegerät und einen Booster (9) zum Steuern des Ladens der ersten Energiespeicherkomponente (7) geladen wird.

5. Verfahren nach Anspruch 3 oder 4, wobei
die Bremsbetätigungsvorrichtungen (4) über einen Entladebegrenzer (10) der Energiespeichervorrichtung (2) versorgt werden.

6. Mobile tragbare Energiespeichervorrichtung (2) zum Versorgen von elektromechanischen Bremsbetätigungsvorrichtungen (4) zum Lösen von elektromechanischen Bremsen eines Zuges, umfassend
eine erste Energiespeicherkomponente (7), und
eine zweite Energiespeicherkomponente (8), wobei
die zweite Energiespeicherkomponente (8) konfiguriert ist, um die erste Energiespeicherkomponente (7) zu laden, und
die erste Energiespeicherkomponente (7) konfiguriert ist, um die Bremsbetätigungsvorrichtungen (4) mit Energie zu versorgen,
**dadurch gekennzeichnet, dass**
die mobile tragbare Energiespeichervorrichtung (2) weiter umfasst
ein Ladegerät und einen Booster (9), der konfiguriert ist, um Laden der ersten Energiespeicherkomponente (7) zu steuern.

7. Mobile tragbare Energiespeichervorrichtung (2) nach Anspruch 6, wobei
die erste Energiespeicherkomponente (7) von einem Kondensator gebildet wird, und
die zweite Energiespeicherkomponente (8) von einer Batterie gebildet wird.

8. Mobile tragbare Energiespeichervorrichtung (2) nach Anspruch 7, wobei
die Batterie von einem eines Lithium-Ionen-Akkus, eines NiMH-Akkus und eines Blei-Säure-Akkus gebildet wird.

9. Mobile tragbare Energiespeichervorrichtung (2) nach einem der Ansprüche 6 bis 8, weiter umfassend
einen Entladebegrenzer (10), der konfiguriert ist, um einen Versorgungsstrom zu steuern, der die Bremsbetätigungsvorrichtungen (4) versorgt.

10. System (1) aus einer mobilen tragbaren Energiespeichervorrichtung (2) nach einem der Ansprüche 6 bis 9 und einem Bremssystem (3) eines Zuges, das mehrere elektromechanische Bremsen umfasst, die mit Bremsbetätigungsvorrichtungen (4) bereitgestellt sind, die in mehrere Bremsbetätigungsvorrichtungsgruppen (5) eingeteilt sind, wobei
die Bremsbetätigungsvorrichtungsgruppen (5) konfiguriert sind, sodass Bremsbetätigungsvorrichtungen einer der Bremsbetätigungsvorrichtungsgruppen (5) über eine Verbindervorrichtung mit der Energiespeichervorrichtung (2) verbindbar sind,
**dadurch gekennzeichnet, dass**
die Bremsbetätigungsvorrichtungen (4) konfiguriert sind, um beim Lösen der Bremsen einen durch ein empirisch bestimmtes optimiertes Geschwindigkeitsprofil der Bremsbetätigungsvorrichtungen (4) reduzierten Energieverbrauch aufzuweisen.

## Revendications

1. Procédé de desserrage des freins électromécaniques d'un train, au moyen d'actionneurs de frein électromécaniques (4) respectivement attribués, comprenant les étapes suivantes :
la connexion des actionneurs de frein (4) à un dispositif de stockage d'énergie portable mobile (2) fournissant de l'énergie électrique pour desserrer les freins ; et
le desserrage des freins en actionnant les actionneurs de frein (4) en utilisant l'énergie du dispositif de stockage d'énergie portable mobile (2),
**caractérisé en ce que**
les actionneurs de frein (4) sont successivement connectés au dispositif de stockage d'énergie portable mobile (2), et
les actionneurs de frein (4) sont commandés selon un profil de vitesse déterminé empiriquement, dans lequel la consommation totale d'énergie des actionneurs de frein (4) pendant le temps de desserrage des freins est minimale pour permettre un desserrage des freins économe en énergie.

2. Procédé selon la revendication 1, dans lequel
les actionneurs de frein (4) sont regroupés en plusieurs groupes d'actionneurs de frein (5), et
les groupes d'actionneurs de frein (5) sont alimentés successivement, individuellement, par le dispositif de stockage d'énergie portable mobile (2).

3. Procédé selon l'une quelconque des revendications précédentes, comprenant l'étape suivante :
la charge d'un premier composant de stockage d'énergie (7) du dispositif de stockage d'énergie (2) au moyen de l'énergie stockée dans un second composant de stockage d'énergie (8) du dispositif de stockage d'énergie (2) ; et l'alimentation des actionneurs de frein (4) en énergie stockée dans le premier composant de stockage d'énergie (7).

4. Procédé selon la revendication 3, dans lequel
le premier composant de stockage d'énergie (7) est formé par un condensateur et le second composant de stockage d'énergie (8) est formé par une batterie, et le premier composant de stockage d'énergie (7) est chargé par l'intermédiaire d'un chargeur et d'un survolteur (9) pour réguler la charge du premier composant de stockage d'énergie (7).

5. Procédé selon la revendication 3 ou 4, dans lequel
les actionneurs de frein (4) sont alimentés par l'intermédiaire d'un limiteur de décharge (10) du dispositif de stockage d'énergie (2).

6. Dispositif de stockage d'énergie portable mobile (2) pour alimenter des actionneurs de frein électromécaniques (4) pour desserrer les freins électromécaniques d'un train, comprenant
un premier composant de stockage d'énergie (7), et
un second composant de stockage d'énergie (8), dans lequel
le second composant de stockage d'énergie (8) est configuré pour charger le premier composant de stockage d'énergie (7), et
le premier composant de stockage d'énergie (7) est configuré pour alimenter en énergie les actionneurs de frein (4),
**caractérisé en ce que**
le dispositif de stockage d'énergie portable mobile (2) comprend en outre
un chargeur et un survolteur (9) configurés pour réguler la charge du premier composant de stockage d'énergie (7).

7. Dispositif de stockage d'énergie portable mobile (2) selon la revendication 6, dans lequel
le premier composant de stockage d'énergie (7) est formé par un condensateur, et
le second composant de stockage d'énergie (8) est formé par une batterie.

8. Dispositif de stockage d'énergie portable mobile (2) selon la revendication 7, dans lequel
la batterie est formée d'un accumulateur lithium-ion, d'un accumulateur NIMH ou d'un accumulateur au plomb.

9. Dispositif de stockage d'énergie portable mobile (2) selon l'une quelconque des revendications 6 à 8, comprenant en outre
un limiteur de décharge (10) configuré pour commande un courant d'alimentation alimentant les actionneurs de frein (4).

10. Système (1) composé d'un dispositif de stockage d'énergie portable mobile (2) selon l'une quelconque des revendications 6 à 9 et d'un système de freinage (3) d'un train comprenant plusieurs freins électromécaniques dotés d'actionneurs de frein (4) regroupés en plusieurs groupes d'actionneurs de frein (5), dans lequel
les groupes d'actionneurs de frein (5) sont configurés de sorte que les actionneurs de frein de l'un des groupes d'actionneurs de frein (5) puissent être connectés au dispositif de stockage d'énergie (2) par un dispositif de connexion,
**caractérisé en ce que**
les actionneurs de frein (4) sont configurés pour présenter une consommation d'énergie réduite lors du desserrage des freins grâce à un profil de vitesse optimisé déterminé empiriquement des actionneurs de frein (4).
